# EUROPEAN PATENT SPECIFICATION

(11) **EP 0 725 722 B1**
(45) Date of publication and mention of the grant of the patent: **23.07.1997**
(21) Application number: 94930982.7
(22) Date of filing: 26.10.1994
(51) Int. Cl.: B29C 45/00, B29C 49/00, B29C 49/64

(54) **METHOD OF FORMING MOLECULARLY ORIENTED PREFORMS**
VERFAHREN ZUM FORMEN VON MOLEKULAR ORIENTIERTEN VORFORMLINGEN
PROCEDE DE PRODUCTION DE PARAISONS A ORIENTATION MOLECULAIRE

(30) Priority: 27.10.1993 US 144204
(43) Date of publication of application: 14.08.1996
(73) Proprietor: BEKUM Maschinenfabriken GmbH, D-12107 Berlin (DE)
(72) Inventor: GITTNER, Franz, D-29594 Soltendieck (DE); ROOS, Uwe-Volker, D-29389 Bodenteich (DE); STEELE, Scott W., Holland, OH 43528-0964 (US)
(74) Representative: Flosdorff, Jürgen, Dr.
(86) International application number: EP9403525
(87) International publication number: WO9511791

(56) References cited:
- EP-A- 0 251 340
- EP-A- 0 309 138
- EP-A- 0 365 945
- EP-A- 0 500 028
- EP-A- 0 564 354
- EP-A- 0 565 874
- DE-A- 3 101 282
- FR-A- 2 248 131
- FR-A- 2 476 536
- GB-A- 2 040 216
- US-A- 4 147 487
- PATENT ABSTRACTS OF JAPAN vol. 012 no. 131 (M-688) ,22 April 1988 & JP,A,62 253409 (YOSHINO KOGYOSHO CO LTD) 5 November 1987,
- PATENT ABSTRACTS OF JAPAN vol. 012 no. 302 (M-732) ,17 August 1988 & JP,A,63 078706 (DAINIPPON PRINTING CO LTD) 8 April 1988,

## Description

The present invention relates to a method injection molding a closed-end preform from a partially crystalline, molecularly orientable plastic for subsequent stretch blow molding, wherein a melt of said material is injected into a preform mold cavity at a predetermined fill rate.

Such a method is known from e.g. US-A-4 357 288.

Stretch blow molding has rapidly gained acceptance as a method of producing oriented plastic containers over a wide range of shapes and sizes.In stretch blow molding, a parison or preform is first formed by either an extrusion or injection molding operation, subsequently stretched, either mechanically or otherwise, and blown in both an axial and radial direction. In so doing, the molecules are aligned along two planes, an arrangement that advantageously improves clarity, impact strength, gas and water vapor barrier properties, and stiffness in the finished container. The resulting containers are lighter weight, resulting in a substantial savings in the amounts of resin used. The amounts of processing additives otherwise required may also be reduced.
The resins normally considered for stretch blow molding include: polyethylene terephthalate (PET), polyvinyl chloride (PVC), polypropylene (PP), high density polyethylene (HDPE) and acrylonitrile copolymers (PAN). Currently, PET is the most widely used, especially in food packaging applications. However, PET lacks hot fill capability and is a relatively high cost material.

Biaxially oriented PP is a potentially lower cost alternative which exhibits good hot fill capability. Nonetheless, oriented PP containers have never really achieved a high degree of commercial success. This has been due in part to the fact that conventional methods of stretch blow molding PP have resulted in containers having only fair optical clarity. More importantly, conventional PP stretch blow molding processes have not been economically attractive, since none of these processes has considered apart from the necessity of an extremely precise temperature control required to obtain orientation of PP, except by using very long heating times. Also the manufacture of the preforms is one very important component of the stretch blow molding process.

There are basically two types of processes for stretch blow molding: 1) the single stage process in which preforms are first made and then allowed to cool to the correct blow molding temperature before being blown into containers on the same machine; and 2) the two-stage process in which preforms first are made on one machine, allowed to cool to room temperature outside of that machine, and then reheated and blown on another machine. Two-stage extrusion type machines have generally been used to make oriented PP preforms and containers. In such a process, preforms are generally extruded, coooled, cut to length, reheated, stretched while the neck finish is being compression molded, then blown, trimmed and ejected.

The reheating of the PP preform is critical because a precise preform temperature must be achieved at which intercrystalline material begins to melt, but at which the crystallites themselves do not melt. Thus, the PP preform must achieve a uniform temperature just below its peak crystalline melting point. Any increase in temperature above this point will cause the crystallites to melt and thereby eliminate any possibility of obtaining optimum orientation during the subsequent stretch blow molding operation. This effect is particularly important for preforms of PP containing resins, and is still not well understood in the industry. In any event, the result has been that conventional reheat methods have used ovens set at the exact final temperature desired for the preform. As those skilled in the art will appreciate, with such heater settings, as the actual average preform temperature approaches the final desired temperature, the driving force to continue any temperature increase in the preform decreases. The result is that a very long time is required to asymptotically approach the final desired temperature and, in practice, this final desired temperature is never quite realized.

Various reheating methods have been described relative to the blow molding of oriented PP containers. Examples include Wiley's U.S. Patent Nos. 3,496,258 and Re. 26,956, and Seeluth's U.S. Patent No. 3,950,459. In the above cited patents, Wiley discloses a method of conditioning an extruded tube of thermoplastic prior to orientation thereof by blow molding. The reheating of the extruded tube is controlled so that the exterior portion of the tube is in a crystalline condition and is oriented, while the inside of the tube is maintained relatively tacky and in a sealable condition. According to Wiley, after the preform is extruded, the outer surface is cooled until it reaches a crystalline state. Then, the outer surface is reheated to bring the temperature of the outer surface to within a few degrees of the crystal melting point. The heat flow is reduced to leave the inside of the preform in a tacky, sealable condition. The reheated preform is then stretch blow molded in the conventional manner. Since the Wiley preform is not at proper orientation temperature throughout its wall thickness, orientation is not achieved throughout the wall thickness and the clarity of the product suffers accordingly.

Seeluth, in U.S. Patent No. 3,950,459, discloses a method of producing a preform and blow molding the preform, wherein a tubular preform is extruded and cooled to below its orientation temperature. The preforms are then passed through a heating zone maintained at an elevated temperature, keeping the preforms free of any angular rotation, to heat the preform to an average temperature within the orientation range. In a second heating zone, Seeluth teaches directing radiant energy on at least three peripheral radial portions of each preform, so that each portion is heated to a different orientation temperature. The preforms are blow molded and the wall thickness in each of the portions is measured. The amount of radiant energy applied to the various portions of the preforms is adjusted in response to these measurements.

As noted above, the two-stage processes may also use preforms which are injection molded on multicavity molds, then cooled to ambient temperatures before introduction into a reheat-blow molding machine. Injection molding of the preforms provides certain advantages over extrusion of the preforms. In contrast to the tubular extruded preforms, the molds for injection molded preforms may be formed in the desired final shape. Furthermore, injection molding eliminates the need to close the end of each preform as required with extruded preforms.

Oas et al., for example, in the U.S. Patent No. 4,357,288, disclose a method of forming PP preforms by an injection molding operation. The melt temperatures of the plastics material are controlled to be just slightly above the melting point index of the PP formulations. These temperatures are said to be sufficiently above the crystalline melt temperature to avoid melt fractures during injection and sufficiently below the temperature at which the PP formulations will degrade. The preform is stripped from the mold, heated to a temperature just below its amorphous flow temperature, and then placed in a stretch blow molding apparatus.

Despite the efforts of those skilled in the art, an efficient method of forming molecularly oriented polypropylene containers having satisfactory clarity was heretofore unavailable.

The object of the invention is an improved method for producing preforms by injecting melted material into a preform mold cavity.

This object is attained according to the invention by a method as defined in claim 1.

Particular embodiments of the invention are disclosed in the dependent claims 2 to 6.

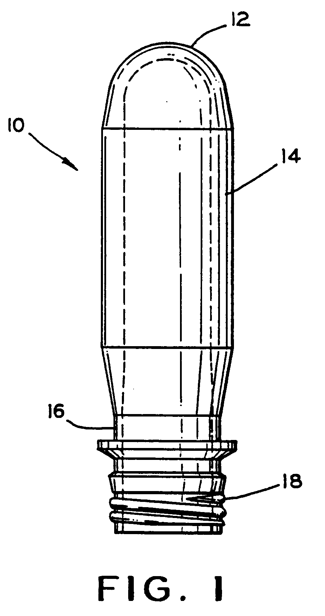

The above and other advantages of the present invention, will become apparent to those skilled in the art from the following detailed description of a preferred embodiment. The drawings show in
- Fig. 1: a longitudinal sectional view of a preform produced in accordance with the present invention; and in
- Fig. 2: a schematic, overhead view of a portion of a reheat system in which the preforms according to the invention can become used.

In accordance with the present invention, a preform 10 is first formed by the injection molding of a partially crystalline, molecularly orientable plastic, subsequently reheated, then stretched and blown in both an axial and radial direction, and rapidly quenched. In so doing, the molecules are preferentially aligned along two planes, an arrangement that advantageously improves clarity, impact strength, gas and water vapor barrier properties, and stiffness in the finished container.

The methods of the present invention may be employed to form molecularly oriented containers of any partially crystalline, molecularly orientable plastic. Exemplary polymers are polymers of at least one mono-1-olefin having 2-8 carbon atoms per molecule. Polypropylene containing materials are preferred, examples or which include PP homopolymers, copolymers which contain more than 50% by weight propylene, or a mixture of polypropylene homopolymers or said copolymers with at least one material such as polyethylene, polybutene, poly-4-methylpentene-1 and elastomeric ethylene/propylene copolymer. Suitable PP containing resins according to the invention can contain lubricants, pigments, dyes, inorganic or organic fillers, polymer additives or other additives which are conventionally used in resins to be blow molded.

A particularly preferred material for use in accordance with the present invention is a propylene/ethylene copolymer which is greater than 50% by weight propylene. The melt index of the propylene/ethylene copolymer is from about 2 to about 50, and is preferably from about 10 to 30.

It is known that an injected molded preform must have the correct crystal morphology to properly orient during the stretch blow molding operation. That is, the crystal structures should be uniformly distributed throughout the preform and the crystallites should be relatively small. It has been determined that the preform crystal morphology is dependent upon the injection molding conditions.

In accordance with the present invention, a closed-ended preform is injection molded from a partially crystalline, molecularly orientable plastic. The injection molding of the preforms is carried out under process conditions which produce minimal flow orientation due to the injection filling process, resulting in crystal structures uniformly distributed throughout the preform and of relatively of small dimensions.

It has also been determined that it is important for the preform to be substantially stress-free. Residual stress has at least two undesirable effects. First, when a stressed preform becomes partially molten as it is reheated to a temperature below the crystal melting point, the shape of the preform can change substantially as the internal stresses are relieved. Should this occur, the preform will become measurably shorter and the walls will become thicker, and the preform will become much more difficult to reheat uniformly and optimally by conventional radiant energy methods. In addition, residual stresses can induce an increase in the rate of recrystallization upon reheating. This effect also can interfere with achieving optimum clarity.

Best results have been achieved at fill rates of from about 3 to about 5 grams per second for a single injection cavity, followed by rapid quenching at cooling rates of 4 to 8 °C/sec. Injection rates above about 5 grams per second result in residual stresses which detrimentally effect the clarity of the subsequently formed container. Injection rates below about 3 grams per second result in a significant number of short shots, and may also cause detrimentally high residual stresses in the preform.

The melt is preferably injected into a mold cavity having chilled mold surfaces which are maintained in a temperature range of between about 5 to 20°C. These conditions have been found to produce a uniformly distributed crystal structure and relatively small crystallite dimensions.

The melt is introduced into the preform cavity at the closed end of the preform and is forced to fill out the remaining cavity by the corresponding injection pressure. Either cold runner or hot runner injection molds, and either thermal or mechanical shut off devices may be employed. In addition, the exact geometry of the melt flow channels does not seem to be critical, so long as a good balance of flow and cooling are achieved between preforms from cavity to cavity.

Once a preform has been produced having the desired geometry and crystal morphology according to the invention, it is allowed to cool to a substantially uniform temperature which is at least below the temperature at which the melting of crystals in the material begins. In a well known manner the preforms are generally allowed to cool to ambient temperature. The preforms then must be reheated prior to the stretch blow molding operation.

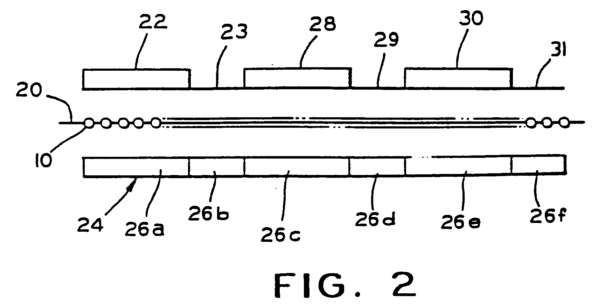

One special range of application of preforms produced in accordance with the invention is the so-called "reheating process" including more than one heating and cooling step and an apparatus for the realization of such a process is illustrated schematically in Figure 2. The preforms 10 are loaded onto a series of rotating mandrels mounted to a conveyor chain 20 which transports the preforms 10 through the following heating steps. The preforms are maintained in proximity to a first IR heating panel 22 until the temperature of the preform near its exterior surface excceds the temperature at which the intercrystalline material begins to melt, and begins to approach the temperature at which all crystalline material near the exterior surface is melted. The heating panels all preferably comprise high intensity, quartz tubular IR heating panels.
A reflective shield 24 extends substantially the length of the conveyor chain and is parallel to each of the heating panels with the conveyor chain running approximately midway therebetween. The reflector shield is provided with slots which communicate with a series of cooling air supply ducts 26a-26f and serve to direct cooling air to the exterior surface of the preforms. There is preferably a separate duct for each heating and cooling zone, so that the amount of cooling air can be separately controlled for each zone.

The preforms are removed from the first heating panel 22 and introduced to a cooling zone 23 where a second source of cooling gas, preferably air at ambient temperature, is supplied through duct 26b in order to allow the temperature gradient developed across the wall thickness of the preforms to substantially equalize by thermal conduction.

These reheating and cooling steps are repeated at least once more, and most preferably two more times, by advancing the preforms by addition IR heating panels 28 and 30, the latter having a relatively lower heating intensity than the initial heating panel, and followed by associated cooling zones 29 and 31. During the cooling steps, the temperature of the preform near its exterior surface is lowered, while the inner layers of the preform wall continue to rise in temperature. Thus, the average temperature of the preform rises relatively rapidly, while the temperature gradient across the wall of the preform decreases, as the preform advances through the reheat system.

The preforms are then preferably introduced into an air convection tempering oven which is set at the temperature desired for orientation upon stretch blow molding, which is a temperature above the temperature at which intercrystalline structes on the preform begin to melt, but below the temperature at which all crystal structures in the preform are melted. The preforms remain in the oven for a time sufficient to allow any remaining temperature gradient which was developed across the thickness of the preform to substantially equalize.

The preforms, having been uniformly reheated to a proper orientation temperature, are rapidly transferred to a stretch blow molding apparatus.

### EXAMPLE

The following example is illustrative of the present invention and does not constitute any limitation with regard to the subject matter of the invention.
A Boy 50 ton horizontal injection press, commercially available from Boy Machines Inc., was used to mold a preform of Hoechst A.G. grade 5746 propylene/ethylene copolymer resin which is 2.5-3,0% ethylene and 97.0-97.5% propylene, and has a melt flow index of about 15. The injection press was outfitted with a 38mm diameter barrel and general purpose screw. The barrel temperature was maintained at about 210°C.
The injection press was run at a 40 second overall injection cycle as follows: the injection fill time was 7 seconds; the injection fill rate was 4.7 grams/sec.; the injection hold time was 7 seconds; and the cooling time was 23 seconds. The mold temperature was maintained at about 5.7C.
The mold cavity was formed such that a generally cylindrical, hollow preform having a closed end and an open end, and weighing approximately 33g was produced. The preform had a length without finish of 9cm, an inner diameter at the main body portion of the preform of 2cm, and an outer diameter at the main body portion of the preform of 3,1cm. The preform wall thickness was 0,55cm at the main body portion, 0,2cm at the neck, and 0,3cm at the closed end or endcap.

## Claims

1. A method of injection molding a closed-end preform (10) from a partially crystalline, molecularly orientable plastic for subsequent stretch blow molding, wherein a melt of said material is injected into a preform mold cavity at a predetermined fill rate, **characteraized** in the controlling of the fill rate to minimize molecular flow orientation induced and the residual stress developed in said plastic material by the injection thereof into the mold, the fill rate being from about 3 grams/second to about 5 grams/second.

2. A method in accordance with claim 1, **characterized** in the further step of rapid quenching after the injection therof into the preform mold at a cooling rate of from about 4 °C/sec. to about 8 °C/sec.

3. A method in accordance with claim 1, wherein said partially crystalline, molecularly orientable plastic is a polypropylene containing polymer.

4. A method on accordance with claim 3, wherein said partially crystalline, molecularly orientable plastic is a propylene/ethylene copolymer which is greater than 50 percent by weight propylene.

5. A method in accordance with claim 4, wherein said copolymer has a melt flow index of from about 2 to about 50.

6. A method in accordance with claim 4, wherein said copolymer has a melt flow index of from about 10 t0 about 30.

## Patentansprüche

1. Verfahren zum Spritzgießen eines Vorformlings (10) mit einem geschlossenen Ende aus einem partiell kristallinen, molekular orientierbaren Kunststoff zum anschließenden Streckblasformen, wobei eine Schmelze des Materials in ein Vorformlingsformnest mit einer vorbestimmten Einfüllgeschwindigkeit eingespritzt wird,
**dadurch gekennzeichnet**,
daß die Einfüllgeschwindigkeit gesteuert wird, um die Molekularfließorientierung und die verbleibende Spannung, die in dem Kunststoffmaterial durch das Einspritzen in die Form hervorgerufen werden, zu minimieren, wobei die Einfüllgeschwindigkeit etwa zwischen 3 g/s und etwa 5 g/s liegt.

2. Verfahren nach Anspruch 1,
gekennzeichnet durch den weiteren Schritt des schnellen Abkühlens nach dem Einspritzen in die Vorformlingsform mit einer Kühlgeschwindigkeit von etwa 4° C/s und etwa 8° C/s.

3. Verfahren nach Anspruch 1,
dadurch gekennzeichnet, daß der partiell kristalline, molekular orientierbare Kunststoff ein Polypropylen enthaltendes Polymer ist.

4. Verfahren nach Anspruch 3,
dadurch gekennzeichnet, daß der partiell kristalline, molekular orientierbare Kunststoff ein Propylen/Äthylen-Copolymer ist, das mehr als 50 Gewichtsprozent Propylen enthält.

5. Verfahren nach Anspruch 4,
dadurch gekennzeichnet, daß das Copolymer einen Schmelzfließindex von etwa 2 bis etwa 50 hat.

6. Verfahren nach Anspruch 4,
dadurch gekennzeichnet, daß das Copolymer einen Schmelzfließindex von etwa 10 bis etwa 30 hat.

## Revendications

1. Procédé de moulage par injection d'une ébauche (10) ayant une extrémité fermée, à partir d'un plastique dont les molécules peuvent être orientées, partiellement cristallin, pour un soufflage-étirage ultérieur, dans lequel une fusion de ladite matière est injectée dans une cavité de moulage d'ébauche à une vitesse de remplissage prédéterminée, caractérisé par la maîtrise de la vitesse de remplissage pour minimiser l'orientation moléculaire induite de l'écoulement et la contrainte résiduelle développée dans ladite matière plastique par l'injection de cette dernière dans le moule, la vitesse de remplissage étant comprise entre environ 3 grammes/seconde et environ 5 grammes/seconde.

2. Procédé selon la revendication 1, caractérisé par l'étape supplémentaire de refroidissement rapide après l'injection dans le moule d'ébauche à une vitesse de refroidissement d'environ 4 °C/s à environ 8 °C/s.

3. Procédé selon la revendication 1, dans lequel ledit plastique dont les molécules peuvent être orientées, partiellement cristallin, est un polymère contenant du polypropylène.

4. Procédé selon la revendication 3, dans lequel ledit plastique dont les molécules peuvent être orientées, partiellement cristallin, est un copolymère de propylène/éthylène qui a plus de 50 pour cent en poids de propylène.

5. Procédé selon la revendication 4, dans lequel ledit copolymère a un indice de fusion compris entre environ 2 et environ 50.

6. Procédé selon la revendication 4, dans lequel ledit copolymère a un indice de fusion compris entre environ 10 et environ 30.
